# EUROPEAN PATENT APPLICATION

(11) **EP 1 245 655 A2**
(43) Date of publication of application: **02.10.2002**
(21) Application number: 02290774.5
(22) Date of filing: 27.03.2002
(51) Int. Cl.: C09D 201/02

(54) **Thermosetting coating composition and coating film forming method using the same**

(30) Priority: 27.03.2001 JP 2001091032; 27.03.2001 JP 2001091033; 27.03.2001 JP 2001091034
(71) Applicant: Nippon Paint Co., Ltd., Osaka-shi, Osaka 531-8511 (JP)
(72) Inventor: Hiroto, Yoneda, Nippon Paint Co., Ltd., Shijonawate-shi, Osaka 575-0003 (JP); Takashi, Irie, Nippon Paint Co., Ltd., Suita-shi, Osaka 565-0802 (JP); Akihiro, Kanakura, Nippon Paint Co., Ltd., Hirakata-shi, Osaka 573-0163 (JP); Yoshifumi, Ichinose, Nippon Paint Co., Ltd., Hirakata-shi, Osaka 573-1149 (JP); Yuji, Okura, Nippon Paint Co., Ltd., Suita-shi, Osaka 565-0802 (JP); Hideo, Morimoto, Nippon Paint Co., Ltd., Osaka-shi, Osaka 550-0024 (JP)
(74) Representative: Hubert, Philippe

(57) **Abstract**

The present invention provides a thermosetting coating composition having a storage stability sufficient to be formed into a one-pack coating despite a small content of organic solvent contained therein and having a sufficient curability, and a method of forming a coating film by which the content of the organic solvent present in a coating at the time of application can be reduced.

A thermosetting coating composition comprising
a component (a) having a number average molecular weight of 300 to 3000 and two or more active methylene group and/or active methine groups per molecule,
a component (b) having a number average molecular weight of 200 to 3000 and two or more α,β-unsaturated carboxylic ester groups per molecule,
a component (c) having an onium salt,
a component (d) having an epoxy group and/or 5-membered ring carbonate group and
a component (e) being an organic acid, a phenol or a Lewis acid,
wherein a solid content of said coating composition at a viscosity of 100 mPa·s is 50% by weight or more at 20°C.

## Description

### BACKGROUND OF THE INVENTION

The present invention relates to a thermosetting coating, and particularly, to a thermosetting coating composition suitable as top coating of automotive bodies and parts, and to a method of forming a coating film using the same.

### PRIOR ART

Michael addition reaction of a polarized double bond, such as an α,β-unsaturated carbonyl group, with an active methylene group or a hydroxyl group forms no reaction byproducts and the bond formed through the reaction is a chemically stable bond, and therefore, it is applied to crosslinking of thermosetting resin compositions for coatings and the like. Typical examples thereof are disclosed in, for example, Japanese Kokai Publication Hei-01-121341, Japanese Kokai Publication Hei-02-500282 and Japanese Kokai Publication Hei-04-222879.

Generally, for the purpose of forming a carbanion from an active hydrogen site in Michael addition reaction, a strong base is used. In many prior technologies using Michael addition reaction for crosslinking of a resin, strong bases, for example, such as hydroxides and alkoxides of alkali metals, quaternary ammonium hydroxides, tertiary amines, guanidine, amidines and tertiary phosphines, are used as a catalyst.

However, such a strongly basic catalyst cannot be used for a one-pack coating because of its strong catalytic activity. Therefore, the following problems with strongly basic catalysts arised: such a catalyst must be used for a two-pack coating such that a resin component and a catalyst are stored separately and are mixed immediately before use thereof: furthermore, since a strongly basic catalyst causes hydrolysis and so on to deteriorate resin and the strongly basic catalyst remains in the resultant coating film, deterioration of appearance or quality is occurred.

In Japanese Kokai Publication Hei-04-222879 is proposed, for the purpose of inhibiting a fast curability produced by a strongly basic catalyst, the method of blocking a catalyst utilizing an acid-base neutralization reaction by addition of volatile carboxylic acid of an equivalent almost the same as that of the strongly basic catalyst.

Although the formation of a neutralization salt of such a strongly basic catalyst can improve the storage stability as a one-pack coating, sufficient curability cannot be obtained. Further, the problem of deterioration of appearance or quality cannot be solved because a strongly basic catalyst remains in a resultant coating film.

In Japanese Kokai Publication Hei-07-173262, Japanese Kokai Publication Hei-11-315145 and so on, a combined catalyst system in which a neutral onium salt which itself exhibits no or a little catalytic activity such as a quaternary ammonium salt is used as a catalyst for Michael addition reaction in the presence of an epoxy group in order to solve the drawbacks of strongly basic catalysts is disclosed. Since such a catalyst is neutral, it can be used for one-pack coatings and can improve the above-mentioned problems with strongly basic catalysts.

On the other hand, in recent years, it has been desired to reduce, in particular, volatile organic components contained in coatings in view of environmental problems. The component that occupies the most portion of the volatile organic components contained in a coating is an organic solvent used for diluting a coating at the time of application to a viscosity at which the coating can be applied. To save the amount of the organic solvent to be used, there generally is a necessity of reducing the viscosity of a coating. Specifically, a method comprising reducing the molecular weight of a resin contained in a coating is adopted. For the purpose of achieving a good quality of a coating film using a coating which comprises such a low molecular weight resin, there is a necessity of increasing the amount of a catalyst or the concentration of functional groups, thereby increasing the curing reaction rate during heating and curing.

However, as a result, the storage stability of a one-pack coating has been deteriorated, even when the above-mentioned combined catalyst system comprising a neutral onium salt and an epoxy group was used. Therefore, both the satisfactory storage stability and curability as a one-pack coating have not been retained.

### SUMMARY OF THE INVENTION

An object of the present invention is to provide a thermosetting coating composition having a storage stability sufficient to be formed into a one-pack coating despite a small content of organic solvent contained therein and having a sufficient curability, and a method of forming a coating film by which the content of the organic solvent present in a coating at the time of application can be reduced.

The present invention is a thermosetting coating composition comprising
a component (a) having a number average molecular weight of 300 to 3000 and two or more active methylene groups and/or active methine groups per molecule,
a component (b) having a number average molecular weight of 200 to 3000 and two or more α,β-unsaturated carboxylic ester groups per molecule,
a component (c) having an onium salt,
a component (d) having an epoxy group and/or 5-membered ring carbonate group and
a component (e) being an organic acid, a phenol or a Lewis acid,
wherein a solid content of said coating composition at a viscosity of 100 mPa·s is 50% by weight or more at 20°C.

The component (a) is preferably at least one member selected from the group consisting of reaction products of a polyol with a carboxylic acid compound having an active methylene group and/or an active methine group, and/or a carboxylic acid ester having an active methylene group and/or an active methine group, reaction products of a polyamine compound with a diketene, acrylic resin having an active methylene group and/or an active methine group, and reaction products of an isocyanate compound with a carboxylic acid compound having an active methylene group and/or a carboxylic acid ester having an active methylene group.

The component (b) is preferably at least one member selected from the group consisting of (meth)acrylate esters of a polyol, unsaturated polyester resins, epoxy(meth)acrylate resins, urethan(meth)acrylate resins, acrylic resins containing an α,β-unsaturated carbonyl group, polyether (meth)acrylate resins, and silicone oligomers having a (meth)acryloyl group.

Further, a cation of the onium salt in said component (c) is preferably at least one cation selected from the group consisting of a quaternary ammonium cation, a quaternary phosphonium cation and a tertiary sulfonium cation. An anion of the onium salt in said component (c) is preferably at least one anion selected from the group consisting of halide anions except fluoride, a carboxylate anion, a sulfonate anion, a sulfate anion, a nitrate anion and a phosphate anion.

Furthermore, the component (c) is preferably a resin resulting from copolymerization of monomer components comprising at least one monomer selected from the group consisting of quaternized aminoalkyl (meth)acrylates, quaternized aminoalkyl (meth)acrylamides, quaternary ammonium (meth)acrylates, quaternary phosphinoalkyl (meth)acrylates and quaternary phosphonium (meth)acrylates.

Further, said component (d) is preferably a glycidyl compound, an alicyclic epoxy compound or an α-olefin epoxide, and is preferably a resin resulting from copolymerization of monomer components comprising at least one monomer selected from the group consisting of glycidyl (meth)acrylates, β-methylglycidyl (meth)acrylates, glycidyl ethers of 4-hydroxybutyl (meth)acrylate and (meth)acrylates of 3,4-epoxycyclohexanemethanol.

A content of said component (e) is preferably 1 to 20 times, in molar number, relative to the onium salt of said component (c).

Further, said thermosetting coating composition may further comprise at least one color component selected from the group consisting of inorganic pigments, organic pigments, dyes and luster-color pigments.

In addition, the present invention is a method of forming a coating film, comprising applying said thermosetting coating composition to an article to be coated,
wherein a coating solid content of said thermosetting coating composition at the time of application is 50% by weight or more.

### DESCRIPTION OF THE PREFERRED EMBODIMENTS

A component (a) contained in the thermosetting coating composition of the present invention is a component having two or more active methylene group and/or active methine groups per molecule. Each of the above-mentioned active methylene groups is preferably a methylene group that is situated between two carbonyl groups, by which the methylene group is kept in an electron-rich state and is in a state where a proton is released easily from the methylene group to give a carbanion. Each of the mentioned-above active methine groups is preferably a methine group that is situated between three carbonyl groups, by which the methine group is kept in an electron-rich state and is in a state where a proton is released easily from the methine group to give a carbanion. As such species, for example, there may be mentioned reaction products of a polyol with a carboxylic acid compound having an active methylene group and/or active methine group or a carboxylic acid ester having an active methylene group and/or active methine group. Said polyol includes alcohols having two or more hydroxyl groups per molecule, for example, ethylene glycol, diethylene glycol, propylene glycol, tetramethylene glycol, 1, 6-hexanediol, neopentyl glycol, trimethylolpropane, glycerol, pentaerythritol, 1,4-cyclohexane dimethanol, 4,4'-isopropylidenedicyclohexanol, bis(hydroxymethyl)tricyclo[5,2,1,0]decane, 1,3,5-tris(2-hydroxyethyl)cyanuric acid, isopropylidenebis(3, 4-cyclohexanediol); ethylene oxides and propylene oxides of these polyols; and adducts of caprolactone to those polyols. Further, for example, acryl polyols, polyester polyols, polyether polyols, epoxy polyols, polyurethane polyols and silicone polyols can also be mentioned.

The above carboxylic acid compound and carboxylic acid ester having an active methylene group include, specifically, acetoacetic acid, malonic acid, cyanoacetic acid, their derivatives and their esters.

The carboxylic acid compound and the carboxylic acid ester having an active methine group include, specifically, methane tricarboxylic acid and their derivatives and their alkyl esters such as those disclosed in EP 0310011A. Further, a polyester resin having two or more active methylene groups per molecule obtained by polycondensation of the above-mentioned polyol and malonic acid or malonic acid ester may also be available.

When the component (a) is prepared in such manner, it is possible to form an ester group of malonic acid or a malonic acid derivative at the terminal of the molecule of the resultant component (a) by carrying out the above-mentioned reaction while rendering the equivalent of the malonic acid or malonic acid derivative excess to that of the polyol.

The terminal ester group is activated by a carbonyl group at the β-position and can exhibit an excellent curability upon heating through an ester exchange reaction with a hydroxyl group of a component (c) or a component (d) described later.

The above-mentioned component (a) includes, for example, reaction products of a polyamine compound with a diketene. The above-mentioned polyamine compound includes a compound having two or more amino groups per molecule such as ethylenediamine, 1,3-diaminopropane, 1,4-diaminobutane, 1,6-hexamethylenediamine, 1,12-diaminododecane, 1,2-diaminocyclohexane, phenylenediamine, piperazine, 2,6-diaminotoluene, diethyltoluenediamine, N,N'-bis(2-aminopropyl)ethylenediamine, N,N'-bis(3-aminopropyl)-1,3-propanediamine and the like.

Further, as the above-mentioned component (a), acrylic resins having an active methylene group and/or active methine group may be mentioned. Specifically, such a resin can be obtained by copolymerization of acrylic monomers having an active methylene group and/or an active methine group in each molecular and, if necessary, acrylic monomers having no active methylene group and/or no active methine group in each molecular and/or non-acrylic monomers. The above acrylic monomer having an active methylene group and/or an active methine group in the molecular include 2-acetoacetoxyethyl ester of (meth)acrylic acid, 2-cyanoacetoxyethyl ester of (meth)acrylic acid, N-(2-cyanoacetoxyethyl) (meth)acrylamide, N-(2-propionylacetoxybuthyl) (meth)acrylamide, N-(4-acetoacetoxymethyl)benzyl (meth)acrylamide, N-(2-acetoacetoamideethyl) (meth)acrylamide and acrylic monomers having malonic acid ester on a side chain thereof such as those disclosed in Japanese Kokai Publication Hei-10-045993.

The acrylic monomer having no active methylene group and/or no methine group in the molecular includes, for example, methyl (meth)acrylate, ethyl (meth)acrylate, propyl (meth)acrylate, n-butyl (meth)acrylate, isobutyl (meth)acrylate, tert-butyl (meth)acrylate, 2-ethylhexyl (meth)acrylate, lauryl (meth)acrylate, phenyl (meth)acrylate, benzyl (meth)acrylate, 2-hydroxyethyl (meth)acrylate, 2-hydroxypropyl (meth)acrylate, an adduct of 2-hydroxyethyl methacrylate and caprolactone, glycidyl (meth)acrylate, (meth)acrylamide, methylenebis(meth)acrylamide, and acrylonitrile. The above-mentioned non-acrylic monomer includes, for example, styrene, α-methylstyrene, itaconic acid, maleic acid, vinyl acetate and the like.

On the other hand, as the above-mentioned component (a), for example, reaction products of an isocyanate compound with the above-mentioned carboxylic acid compound having an active methylene group and/or the above-mentioned carboxylic acid ester having an active methylene group can be mentioned. Specifically, the above-mentioned isocyanate compound includes tolylenediisocyanate, 4,4'-diphenylmethanediisocyanate, xylylenediisocyanate, hexamethylenediisocyanate, lysindiisocyanate, 4,4'-methylenebis(cyclohexylisocyanate), methylcyclohexanediisocyanate, 1,3-(isocyanatemethyl)cyclohexane, isophoronediisocyanate, trimethylhexamethylenediisocyanate, norbornenediisocyanate, dimers, trimers and adducts of these isocyanates.

The above-mentioned component (a) may have a plurarity of hydroxyl groups or the like as well as an active methylene group and/or an active methine group in the same molecular. These may be used singly or in combination of two or more species. It is to be noted that a compound having an onium salt, an epoxy group or the like in the same molecular is not the component (a), but is defined as the component (c) or the component (d) described later.

The component (a) contained in the thermosetting coating composition of the present invention is preferably a polyester resin or an acrylic resin from the viewpoint of the compatibility with other components.

The number average molecular weight of the component (a) contained in the thermosetting coating composition of the present invention is 300 to 3000. If the above number average molecular weight is less than 300, a resultant coating film has a low hardness, or the coating has an insufficient curability so that the solvent, water or weather resistance of the coating film is reduced. On the other hand, if it exceeds 3000, the component (a) itself has a high viscosity, by which the amount of an organic solvent contained in a coating diluted at the time of application becomes large. The number average molecular weight is more preferably 500 to 2500.

The active hydrogen equivalent of the above-mentioned component (a) is preferably 40 to 1000, and more preferably 50 to 500. If the active hydrogen equivalent is less than 40, it is feared that the compatibility with other components described later is reduced or that a resultant coating film becomes hard and fragile. On the other hand, if it exceeds 1000, a resultant coating film has a small crosslinking density and it is feared that physical properties and performance of a coating film are reduced. The active hydrogen equivalent used in this specification means a molecular weight per functional group, provided that a methylene group is bifunctional and a methine group is monofunctional.

The component (b) contained in the thermosetting coating composition of the present invention is a component having two or more α,β-unsaturated carboxylic acid ester groups per molecule, that is, a component having two or more α,β-unsaturated carboxylic acid ester groups with a double bond between the α- and β-carbons as to a carbonyl group. The above component (b) includes, specifically, (meth)acrylate ester of polyol. The above-mentioned polyol includes those described for the above component (a). The above (meth)acrylate ester of polyol includes, for example, ethylene glycol di(meth)acrylate, neopentylglycol di(meth)acrylate, trimethylolpropane tri(meth)acrylate, pentaerithrytol tetra(meth)acrylate, dipentaerithrytol hexa(meth)acrylate, 1,4-cyclohexyldimethanol di(meth)acrylate, 4,4'-isopropylidenecyclohexanol di(meth)acrylate, bis(hydroxymethyl)tricyclo [5,2,1,0]decane di(meth)acrylate, 1,3,5-tris(2-hydroxyethyl)cyanuric acid tri(meth)acrylate and the like; poly(meth)acrylate resin of acrylpolyol, polyester polyol, polyether polyol, epoxy polyol, polyurethan polyol, silicone polyol and the like.

Further, the component (b) mentioned above includes an unsaturated polyester containing an α,β-unsaturated dicarboxylic acid, for example, such as fumaric acid and maleic acid. The above unsaturated polyester can be obtained, specifically, by polycondensation of an acid component comprising an α,β-unsaturated dicarboxylic acid such as maleic anhydride and fumaric acid and other polycarboxylic acids such as phthalic anhydride, isophthalic acid, terephthalic acid, adipic acid, sebacic acid and trimellitic acid with the polyol described for the above component (a).

Further, the above-mentioned component (b) includes, for example, epoxy (meth)acrylate resin, urethane (meth)acrylate resin, acrylic resin containing an α,β-unsaturated carbonyl group, polyether (meth)acrylate resin and silicone oligomer having a (meth)acryloyl group. The above-mentioned epoxy (meth)acrylate resin can be obtained, for example, by ring-opening addition of an epoxy group of an epoxy resin such as that of the bisphenol type and that of the novolak type using its reaction with methacrylic acid or acrylic acid. The above-mentioned urethane (meth)acrylate resin can be obtained, for example, by addition reaction of a polyisocyanate compound such as isophoronediisocyanate, tolylenediisocyanate, diphenylmethanediisocyanate, hexamethylenediisocyanate and the like or urethane prepolymer thereof with 2-hydroxyethyl (meth)acrylate. Further, as the acrylic resin containing an α,β-unsaturated carbonyl group includes, for example, an acrylic resin having (meth)acrylate group on a side chain can be obtained by allowing (meth)acrylic acid to react with an acrylic resin resulting from copolymerization of glycidyl (meth)acrylate. Conversely, it is also possible to allow an acrylic monomer having an epoxy group such as glycidyl (meth)acrylate to react with an acrylic resin having a carboxyl group. The above polyether (meth)acrylate resin can be obtained, for example, by allowing 2-(meth)acryloyloxyethylisocyanate to react with a polyether having a hydroxyl group at the terminal thereof. Further, the above silicone oligomer having (meth)acryloyl group includes, for example, polyorganosiloxane having 3-(meth)acryloyloxypropyl groups at its both terminals.

Moreover, the above-mentioned component (b) may have a plurarity of hydroxyl groups or the like as well as α,β-unsaturated carboxylic acid ester group. These may be used singly or in combination of two or more species. It is to be noted that, in this specification, a compound having an epoxy group in the same molecular is not the component (b), but is defined as the component (d) described later.

The component (b) contained in the thermosetting coating composition of the present invention is preferably (meth)acrylate ester of polyol from the viewpoint of its industrial availability.

The number average molecular weight of the component (b) contained in the thermosetting coating composition of the present invention is 200 to 3000. If the above number average molecular weight is less than 200, the component vaporizes away during heating and curing after its application, or a resultant coating film has a low hardness, or the coating has an insufficient curability so that the solvent, water or weather resistance of the coating film is reduced. On the other hand, if it exceeds 3000, the component (b) itself has a high viscosity, by which the amount of an organic solvent contained in a coating diluted at the time of application becomes large. The number average molecular weight is more preferably 500 to 2500.

The double bond equivalent in the above-mentioned component (b) is preferably 100 to 1500, and more preferably 100 to 1000. If the double bond equivalent is less than 100, some (meth)acrylate groups remains unreacted in the resultant coating film, and therefore, it is feared that the weather resistance of the coating film is reduced or that the resultant coating film becomes hard and fragile. On the other hand, if it exceeds 500, a resultant coating film has a small crosslinking density and it is feared that physical properties and performance of a coating film are reduced. The double bond equivalent used in this specification means a molecular weight per double bond.

The ratio of the equivalent of active hydrogens contained in the thermosetting coating composition of the present invention to the equivalent of double bonds contained therein is preferably 0.3 to 3.0, and more preferably 0.5 to 2.0. If the equivalent ratio is out of the above-mentioned ranges, it is feared that the curability becomes insufficient. The above equivalent of active hydrogens can be determined from the formula [the solid weight of the above component (a) in the coating composition]/[the above equivalent of active hydrogens]. The equivalent of the double bond can be determined from the formula [the solid weight of the above component (b) in the coating composition]/[the equivalent of double bonds].

The component (c) contained in the thermosetting coating composition of the present invention is a component having an onium salt. It is a component which functions substantially as a reaction catalyst in the presence of the component (d) described later, having an epoxy group and/or a 5-membered ring carbonate group. As the component (c) contained in the thermosetting coating composition of the present invention, onium salt compounds, resins having an onium salt and the like are mentioned.

The cation of the onium salt compound which can be used as the component (c) includes, specifically, quaternary ammonium cations such as tetrabutylammonium cation, tetramethylammonium cation, tetrapropylammonium cation, tetraoctylammonium cation, tetrahexylammonium cation, tetradecylammonium cation, tetrahexadecylammonium cation, triethylhexylammonium cation, 2-hydroxyethyltrimethylammonium (choline) cation, methyltrioctylammonium cation, cetyltrimethylammonium cation, 2-chloroethyltrimethylammonium cation and methylpyridinium cation; quaternary phosphonium cations such as tetrabutylphosphonium cation; tertiary sulfonium cations such as trimethylsulfonium cation.

The cation of the onium salt in the component (c) contained in the thermosetting coating composition of the present invention is preferably quaternary ammonium cation, various kinds of which are industrially available.

The anion of the onium salt in the above component (c) is an anion that forms a stable salt together with the above-mentioned cation. The anion includes, specifically, halide anions except fluoride such as chloride anion, bromide anion and iodide anion; carboxylate anions such as benzoate anion, salicylate anion, maleate anion and phthalate anion; sulfonate anions such as methansulfonate anion, p-toluenesulfonate anion and dodecylbenzenesulfonate anion; sulfate anions such as sulfate anion and methosulfate anion; nitrate anions such as nitrate anion; phosphate anions such as phosphate anion and di-tert-butyl phosphate anion.

The anion of the onium salt in the component (C) contained in the thermosetting coating composition of the present invention is preferably the above halide anions or carboxylate anions from the viewpoint of curability.

The component (c) includes, specifically, compounds having an onium salt such as tetrabutylammonium chloride, tetraethylammonium bromide, diethyldibutylammonium chloride, octyltrimethyl bromide, dioctyldimethylammonium salicylate, benzyllauryldimethylammonium chloride, 2-hydroxyethyltrimethylammonium chloride, tetraethylphosphonium chloride, tetraethylphosphonium bromide, tetrabutylphosphonium chloride, trimethylsulfonium chloride and so on.

Such onium salts are substantially neutral and their aqueous solutions exhibit neutral pH from weak basic to weak acidic.

As the above-mentioned resin having an onium salt, resins obtained by copolymerization of an acrylic monomer having an onium salt with other monomers having no onium salt using a conventional method can be used. The above-mentioned acrylic monomer having an onium salt includes, for example, quaternized aminoalkyl (meth)acrylates such as 2-(methacryloyloxy) ethyltrimethylammonium chloride and 2-(methacryloyloxy) ethyltrimethylammonium bromide; quaternized aminoalkyl(meth)acrylamide such as methacryloylaminopropyltrimethylammonium chloride and methacryloylaminopropyltrimethylammonium bromide; quaternary ammonium (meth)acrylates such as tetrabutylammonium (meth)acrylate and trimethylbenzylammonium (meth)acrylate; quaternary phosphinoalkyl (meth)acrylates such as methacryloyloxyethyltrimethylammonium dimethylphosphate; and quaternary phosphonium (meth)acrylates such as trioctyl(4-vinylbenzyl)phosphonium chloride, tri-n-butyl(2-methacryloyloxyethyl) phosphonium chloride, 2-acidpohophoxyethylmethacrylate ditetrabutylammonium salt, tri-n-butylmethacryloyloxyethyl phosphonium chloride and tri-n-octyl-4-vinylbenzylphosphonium chloride. These may be used singly or in combination of two or more species.

As the above-mentioned other monomers having no onium salt can be mentioned acrylic monomers having an active methylene group and/or active methine group in the molecular, described for the above-mentioned component (a), and acrylic monomers and non-acrylic monomers having no active methylene group and/or no active methine group in the molecular.

The content of the above-mentioned component (c) in the thermosetting coating composition of the present invention, based on the equivalent of the onium salt in a coating, is preferably 0.1 to 10%, and more preferably 0.2 to 5% relative to the combined equivalent of the equivalents of the active hydrogens and the double bonds contained in the coating. If the content mentioned above is less than 0.1%, there is a possibility of reduction of curability. If it exceeds 10%, it is feared that it becomes difficult for those monomers to be contained uniformly in a coating composition or that the performance of a resultant coating film is deteriorated.

The component (d) contained in the thermosetting coating composition of the present invention is a component having an epoxy group and/or a 5-membered ring carbonate group and which functions as a reaction catalyst together with the above-mentioned component (c) having an onium salt. The component (d) contained in the thermosetting coating composition of the present invention includes compounds and resins having an epoxy group and/or a 5-membered ring carbonate group.

Such species include glycidyl compounds such as phenyl glycidyl ether, bisphenol epoxy resins, reaction products of epichlorohydrin and polyol, glycidyl benzoate, and glycidyl (meth)acrylate; alicyclic epoxy compounds such as 4-(3,4-epoxycyclohexyl)methoxycarbonyl-1,2-epoxycyclohexane and 3,4-epoxycyclohexane methanol; and α-olefin epoxides such as epoxyhexadecane. The above compound having a 5-membered carbonate group includes 2-oxodixolane and its derivatives.

Further, the component (d) may be a resin that can be obtained by copolymerization of an acrylic monomer having an epoxy group and/or a 5-membered ring carbonate group and other monomers having no epoxy group and/or no 5-membered ring carbonate group using a conventional method. The above acrylic monomer having an epoxy group and/or a 5-membered ring carbonate group and the above-mentioned other monomers having no epoxy group and/or no 5-membered ring carbonate group include, for example, glycidyl ethers such as glycidyl (meth)acrylate, β-methylglycidyl (meth)acrylate and 4-hydroxybutyl (meth)acrylate, and (meth)acrylate of 3,4-epoxycyclohexanemethanol. The acrylic monomer having a 5-membered ring carbonate group includes, for example, 4-methacryloyloxymethyl-2-oxo-1,3-dioxolane. These may be used singly or in combination of two or more species.

The above-mentioned other monomers include monomers which can be used as the other monomers for the resins having an onium salt in the above-mentioned component (c).

The content of the above-mentioned component (d) in the thermosetting coating composition of the present invention, based on the equivalent of epoxy groups and/or 5-membered ring carbonate groups in a coating, is preferably 0.2 to 50%, and more preferably 1 to 30% relative to the combined equivalent of the equivalents of the active hydrogens and the double bonds contained in the coating. If the above content is less than 0.2%, there is a possibility of reduction of curability. If it exceeds 50%, it is feared that the performance of a resultant coating film is deteriorated.

In the thermosetting coating composition of the present invention, a nonaqueous dispersion (c-1) comprising resin particles insoluble in an organic solvent having an onium salt can be used as the component (c) having an onium salt. A nonaqueous dispersion (d-1) comprising resin particles insoluble in an organic solvent having an epoxy group and/or a 5-membered ring carbonate group can be used as the above-mentioned component (d).

The above-mentioned nonaqueous dispersion (c-1) can be obtained, for example, by polymerizing, in a resin solution comprising a resin having no onium salt dissolved in an organic solvent, a mixed monomer solution comprising an acrylic monomer having an onium salt such as is soluble in the resin solution mentioned above before the polymerization but is insoluble after the polymerization and other monomers using a conventional method. The above-mentioned resin having no onium salt is not particularly limited, and includes acrylic resins obtainable by copolymerization of the above-mentioned other monomers having no onium salt using a conventional method, polyester resins obtainable by polycondensation of an acid component such as a polycarboxylic acid and an alcohol component such as a polyol using a conventional method and alkyd resins modified with a fatty acid, an oil component or the like.

The above-mentioned other monomers having no onium salt include, specifically, acrylic monomers having an active methylene group and/or an active methine group in the molecular described for the component (a) mentioned above, acrylic monomers and non-acrylic monomers having no active methylene group and/or no active methine group in the molecular. The above-mentioned polycarboxylic acid includes, specifically, adipic acid, phthalic acid, maleic acid, sebacic acid and their anhydride. The above-mentioned polyol includes those described for the component (b) mentioned above. Further, specifically, the fatty acid mentioned above includes, for example, oleic acid, linolenic acid and stearylic acid. The above-mentioned oil component includes, for example, castor oil, linseed oil, coconut oil and the like. If necessary, such a resin may have a (meth)acrylate group introduced by addition of isocyanateethyl (meth)acrylate or the like when the above resin has a hydroxyl group.

The above-mentioned organic solvent is not particularly limited, but includes well-known solvents such as aliphatic hydrocarbon solvents, aromatic hydrocarbon solvents, petroleum mixed solvents, alcohol solvents, ether solvents, ketone solvents, ester solvents and so on. These may be used singly or in combination of two or more species.

As a monomer which is used as a raw material of a resin having an onium salt to be used in the above-mentioned nonaqueous dispersion (c-1), the components described for the above-mentioned component (c) can be employed.

Moreover, thus obtained nonaqueous dispersion (c-1) mentioned above may have a plurarity of active methylene groups, active methine groups, (meth)acrylate groups, hydroxyl groups or the like as well as an onium salt in the same molecular.

Further, the above-mentioned nonaqueous dispersion (d-1) can be obtained by polymerizsation, in a resin solution comprising a resin having no epoxy group and/or no 5-membered ring carbonate group dissolved in an organic solvent, of a mixed monomer solution comprising an acrylic monomer having an epoxy group and/or a 5-membered ring carbonate group such as is soluble in the resin solution before the polymerization but is insoluble after the polymerization and other monomers using a conventional method. The above-mentioned resin having no epoxy group and/or no 5-membered ring carbonate group is not particularly limited, and includes acrylic resins obtainable by copolymerization of the above-mentioned other monomers having no epoxy group and/or no 5-membered ring carbonate group using a conventional method, the polyester resins and alkyd resins described for nonaqueous dispersion (c-1) mentioned above.

The above-mentioned other monomers having no epoxy group and/or no 5-membered ring carbonate group includes, specifically, other monomers having no onium salt described for the nonaqueous dispersion (c-1) mentioned above.

As a monomer which is used as a raw material of a resin having an epoxy group and/or a 5-membered ring carbonate group to be used in the above-mentioned nonaqueous dispersion (d-1), the components described for the above-mentioned component (d) can be employed.

The thus obtained nonaqueous dispersion (d-1) mentioned above may have a plurality of active methylene groups, active methine groups, (meth)acrylate groups, hydroxyl groups or the like as well as an epoxy group and/or a 5-membered ring carbonate group in the same molecular.

The weight ratio of the above-mentioned resin having no onium salt in the above-mentioned nonaqueous dispersion (c-1) to the above-mentioned mixed monomer solution and that of the resin having no epoxy group and/or no 5-membered ring carbonate group in the above-mentioned nonaqueous dispersion (d-1) to the above-mentioned mixed monomer solution are preferably 80/20 to 10/90, respectively. If the above weight ratios exceed 80/20, there is a possibility of reduction of curability. If they less than 10/90, it is feared that any stable nonaqueous dispersion cannot be obtained.

The mean particle diameters of the resin particles contained in the above-mentioned nonaqueous dispersions (c-1) and (d-1) are preferably 0.1 to 1.0 µm, and more preferably 0.1 to 0.5 µm. If the mean particle diameters mentioned above are less than 0.1 µm, there is a difficulty in polymerization and such resins are difficult to get. On the other hand, if they exceed 1.0 µm, such resin particles are easy to be inhomogeneous in a coating composition and there is a possibility of occurrence of sagging in the step of application.

Further, the above-mentioned nonaqueous dispersions (c-1) and (d-1) preferably have a solid content of 40% by weight or more and a viscosity of 10000 mPa·s or below at 20°C, and more preferably have a solid content of 50% by weight or more and a viscosity of 5000 mPa·s or below. When the above solid content is 40% by weight or more and the above viscosity exceeds 10000 mPa·s, it is feared that the content of an organic solvent present in a coating at the time of application becomes large. The lower limit of the above viscosity is not particularly limited, but substantially is 50 mPa·s.

The combined content of the above-mentioned nonaqueous dispersions (c-1) and/or (d-1) contained in the thermosetting coating composition of the present invention, based on solid content, is preferably 10 to 150% by weight relative to the combined weight of the above-mentioned components (a) and (b). If the above combined content is less than 10% by weight, the curability and the antisagging property during application become insufficient. If it exceeds 150% by weight, the viscosity of a coating becomes high and it is feared that the content of the organic solvent present in a coating at the time of application becomes large.

The component (e) contained in the thermosetting coating composition of the present invention, specifically, is an organic acid, a phenol or a Lewis acid. Such component (e) functions as a reaction retardant. The above organic acid includes, for example, aliphatic monocarboxylic acids such as formic acid, acetic acid, propionic acid, butyric acid, laurylic acid, versatic acid and sterarylic acid; aliphatic dicarboxylic acids such as oxalic acid, malonic acid, adipic acid and sebacic acid; aliphatic unsaturated carboxylic acids such as acrylic acid, crotonic acid, maleic acid and oleic acid; aromatic carboxylic acids such as benzoic acid, salicylic acid and phthalic acid; organic phosphoric acids such as dibutylphosphoric acid and monooctylphosphoric acid; sulfonic acids such as butylsulfonic acid, p-toluenesulfonic acid and naphthylsulfonic acid. The above phenol includes, for example, cresol, tert-butylphenol and naphthol. The Lewis acid includes, specifically, organotin compounds and organozinc compounds. The above organotin compounds include dibutyltin diacetate, dibutyltin dilaurate, tin 2-ethylhexylate, dibutyltin bis(methylfumarate), dibutyltin didodecylbenzenesulfonate, tributyltin acetate, dibutyltin dimethoxide, tributyltin chloride and tributyltin methoxide. The above organozinc compounds include, for example, zinc stearate. These may be used singly or in combination of two or more species.

The content of the above-mentioned component (e) in the thermosetting coating composition of the present invention is not particularly limited and may be adjusted depending on the acid strength and molecular weight of the component (e) mentioned above, but it is preferably 0.01 to 30 times, more preferably 1.5 to 20 times the number of moles of the onium salt of the above-mentioned component (c). If the content is less than 0.01 time, it is feared that the retarding effect becomes insufficient, resulting in deterioration of storage stability. On the other hand, if it exceeds 30 times, it is feared that the curability is reduced and the water resistance of a resulting coating film is reduced.

The thermosetting coating composition of the present invention can contain color components as well as the above-mentioned components. The above color components include, for example, an inorganic pigment such as iron oxide, lead oxide, titanium dioxide, carbon black, coal dust, talc, barium sulfate, cadmium yellow, cadmium red and chromium yellow; an organic pigment such as phthalocyanine blue, phthalocyanine green, carbazole violet, anthrapyridine, azo orange, flavanthrone yellow, isoindoline yellow, azo yellow, indanthrone blue, dibromanzusrone red, perylene red, azo red, anthraquinone red and quinacridone red; a dye such as 1:2 chromium complex black, 1:2 chromium complex yellow and 1:2 cobalt complex yellow; and a luster-color pigment such as aluminum powder, alumina powder, bronze powder, copper powder, tin powder, zinc powder, iron phosphide, metal-coated mica powder, titanium dioxide-coated mica powder and titanium dioxide-coated glass powder. These may be used singly or in combination of two or more species.

The thermosetting coating composition of the present invention can, if necessary, contain additives, organic solvents and so on well-known to persons skilled in the art. The above-mentioned additives are not particularly limited and may be antisagging agents, uv absorbers, light stabilizers, antioxidants, surface regulator, antifoaming agents, pigment dispersing agents and antistatic agents.

The above-mentioned antisagging agent is not particularly limited and may be cross-linkable organic microparticles, silica microparticles and the like. The above-mentioned cross-linkable organic microparticles can be obtained by methods well-known to persons skilled in the art, for example, a method comprising emulsion-polymerizing a mixed monomer solution having a polyfunctional acrylic monomer by use of an emulsifier to obtain an emulsion, followed by distillation of water or replacement of water with an organic solvent. Further, the above-mentioned silica microparticles are not particularly limited and may be those which are commercially available, such as colloidal silica and ultramicroparticle anhydrous silica.

If the thermosetting coating composition of the present invention contains the above-mentioned antisagging agent, the solid content thereof is preferably 1 to 10% by weight relative to the combined weight of the solid of the above-mentioned components (a), (b), (c) and (d). If the content exceeds 10% by weight, the viscosity of a coating becomes high and it is feared that the content of an organic solvent present in a coating at the time of application becomes large or that a resulting coating film becomes cloudy.

Such a thermosetting coating composition can be obtained by mixing and stirring the above-mentioned components by a method being well-known to persons skilled in the art and comprising use of a mill, a disperser or the like.

In the thermosetting coating composition of the present invention, the solid content of the coating composition at a viscosity of 100 mPa·s is 50% by weight or more at 20°C. If a resulting coating composition has a viscosity out of that predetermined range, it is possible to adjust the viscosity by, for example, further addition of an organic solvent or distillation of the organic solvent contained in the coating under reduced pressure. The above-mentioned viscosity is a standard viscosity at the time of application, and coatings are controlled by use of such viscosities in practical fields of application. The above-mentioned viscosity can be measured with a single cylinder type rotary viscometer, examples of which include measuring instruments called B-type viscometers, such as Model BM manufactured by Tokyo Keiki, Co., Ltd. If the solid content is less than 50% by weight, the content of the organic solvent in the coating becomes large, resulting in generation of various problems including environmental pollution. The solid content is preferably 60% by weight or more. A viscosity of 100 mPa·s at 20°C corresponds to about 30 seconds when viscosity is measured using a Ford cup No. 4 (20°C), which is suitably used in the field of application.

The method of forming a coating film of the present invention is characterized in that, in a method of forming a coating film in which the above-mentioned thermosetting coating composition is applied to an article to be coated, the coating solid content of a thermosetting coating composition at the time of application is 50% by weight or more. The article to be coated is exemplified by metallic materials such as iron, steel, aluminum, tin, zinc and so on, alloys having these metals, their castings and plastic materials, and preferably is a body and parts of an automobile such as a car, a truck, a motorcycle and a bus. The surface thereof may be treated in advance or may be coated with an under coating to form an under coating film thereon. Moreover, it may be coated with an intermediate coating on the under coating film to form an intermediate coating film, or may be further coated with a base coating to form a base coating film thereon. Such an under coating, an intermediate coating and a base coating are well-known to the persons skilled in the art.

The thermosetting coating composition at the time of application can be subjected to viscosity adjustment with an organic solvent, as needed. The above organic solvent is not particularly limited and may be organic solvents well-known to the persons skilled in the art. The viscosity of the coating composition to be applied is not particularly limited and may be suitably set according to the method of application described later. The method of application is not particularly limited and may be, for example, brush coating, roller coating, air spray coating, airless spray coating, immersion coating and so on. In particular, when the article to be coated is automotive bodies and parts, air electrostatic spray coating or rotary atomizing-type electrostatic coating is preferred. The viscosity of a coating at the time of application using such a method is usually 100 mPa·s at 20°C, which corresponds to about 30 seconds measured using a Ford cup No. 4 (20°C).

From the viewpoint of reducing the amount of volatilized organic solvent during coating or heating, the coating solid content of the thermosetting coating composition at the time of application is 50% by weight or more, and more preferably 60% by weight or more.

The film thickness of a coating is not particularly limited and may be suitably set depending on the purposes of a coated product to be obtained.

The temperature at which heating and curing are conducted is preferably 80°C to 200°C, and more preferably 100°C to 180°C. If the temperature is lower than 80°C, it is feared that the curability of the resultant coating becomes insufficient. If the temperature exceeds 200°C, it is feared that the resultant coating film becomes hard and fragile. The time for heating is not particularly limited and may be suitably set depending on the above-mentioned heating temperature.

Since the thermosetting coating composition of the present invention contains components (a) to (e) having specific properties and/or structures, it becomes possible, heretofore impossible, to retain both storage stability and curability in so-called super high solid coatings with very small content of an organic solvent.

In addition, since the method of forming a coating film according to the present invention uses the above-mentioned thermosetting coating composition, it can reduce the content of an organic solvent present in a coating at the time of application.

### EXAMPLES

The following specific examples illustrate the present invention in further detail. They are, however, by no means limitative of the scope of the invention.

In the examples, "part(s)" and "%" mean "part(s) by weight" and "% by weight", respectively, unless otherwise specified.

### Production Example 1 Preparation of component (a-1) solution

A flask equipped with a condenser, a sterring rod, a thermometer, a dropping funnel and a nitrogen inlet tube was charged with 72 parts of xylene and was heated to 135°C and kept at this temperature. Thereafter, a mixed monomer solution shown in Table 1 was dropped over 3 hours, and then maturing was carried out for 0.5 hours. Further, a mixed solution containing 1 part of Kayaester O (tert-butylperoxy-2-ethylhexanoate, manufactured by Kayaku-Akzo) and 10 parts of xylene was dropped over 0.5 hour, and then maturing was carried out for 1.5 hours. Thereafter, 30 parts of solvent was evaporated under reduced pressure, to give a component (a-1) solution. The solid content of the resultant component (a-1) solution was 64.2% by weight. The number average molecular weight thereof determined by GPC (gel permeation chromatography) measurement was 2450. The active hydrogen equivalent was 153.

### Production Example 2 Preparation of component (a-2) solution

A flask of the same type as employed in Example 1 was charged with 45 parts of Solvesso 100 (aromatic hydrocarbon organic solvent made by Esso Co.) and 45 parts of n-butanol and was heated to 120°C and kept at this temperature. Thereafter, a mixed monomer solution shown in Table 1 was dropped over 3 hours, and then maturing was carried out for 0.5 hours. Further, a mixed solution containing 1 part of Kayaester O, 5 parts of solvesso 100 and 5 parts of n-butanol was dropped over 0.5 hour, and then maturing was carried out for 1.5 hours. Thereafter, 48 parts of solvent was evaporated under reduced pressure, to give a component (a-2) solution. The solid content, the number average molecular weight determined by GPC measurement, and the active hydrogen equivalent of the resultant component (a-2) solution are shown in Table 1.

### Production Example 3 Preparation of component (a-3) solution

The monomer shown in Table 2 was placed in a flask equipped with a condenser, a solvent recovery unit, a stirring rod, a thermometer and a nitrogen inlet tube and then was dissolved completely by being heated to 120-130°C. The solution was heated to 150-180°C slowly while the methanol formed is evaporated. After completion of the removal of methanol, unreacted dimethyl malonate was distilled under reduced pressure to be recovered as shown in Table 2. Further, after cooling of the mixture to about 50°C, propyleneglycol monomethylether acetate was added according to Table 2, to give a component (a-3) solution. The solid content, the number average molecular weight determined by GPC measurement, and the active hydrogen equivalent of the resultant component (a-3) solution are shown in Table 2.

### Production Example 4 Preparation of component (a-4) solution

Heating was carried out in the same manner as Production Example 3 except using the monomers shown in Table 2. After completion of the removal of methanol, unreacted dimethyl malonate was distilled under reduced pressure to be recovered as shown in Table 2. Further, after cooling of the mixture to about 50°C, propyleneglycol monomethylether acetate was added according to Table 2 to give a component (a-4) solution. The solid content, the number average molecular weight determined by GPC measurement, and the active hydrogen equivalent of the resultant component (a-4) solution are shown in Table 2.

### Production Example 5 Preparation of component (a-5) solution.

A flask of the same type as employed in Example 1 was charged with 90 parts of xylene, and was heated to 120°C and kept at this temperature. Thereafter, a mixed monomer solution shown in Table 3 was dropped over 3 hours, and then maturing was carried out for 0.5 hours. Further, a mixed solution containing 0.3 part of Kayaester O and 10 parts of xylene was dropped over 0.5 hour, and then maturing was carried out for 1.5 hours. Thereafter, 46 parts of solvent was evaporated under reduced pressure to give a component (a-5) solution. The solid content, the number average molecular weight determined by GPC measurement, and the active hydrogen equivalent of the resultant component (a-5) solution are shown in Table 1.

### Production Example 6 Preparation of component (a-6) solution

A component (a-6) solution was obtained in the same manner as Production Example 5 except using the monomers shown in Table 1. The solid content, the number average molecular weight determined by GPC measurement, and the active hydrogen equivalent of the resultant component (a-6) solution are shown in Table 1.

### Production Example 7 Preparation of component (b-1) solution

A flask of the same type as employed in Example 1 was charged with 55 parts of xylene, and was heated to 130°C and kept at this temperature. Thereafter, a mixed solution containing 55 parts of n-butyl methacrylate, 10 parts of styrene, 25 parts of glycidyl methacrylate, 10 parts of α-methylstyrene dimmer, 8 parts of Kayaester O and 10 parts of xylene was dropped over 3 hours, and then maturing was carried out for 0.5 hours. Further, a mixed solution containing 1 part of Kayaester O and 10 parts of xylene was dropped over 0.5 hour, and then maturing was carried out for 1.5 hours. Thereafter, 13 parts of solvent was evaporated under reduced pressure to give an acrylic resin solution having solid content of 64.7% by weight and number average molecular weight determined by GPC measurement of 2230.

Further, to 155 parts of the acrylic resin solution obtained, 12 parts of acrylic acid and 0.05 part of hydroquinone were added and heated to 120°C to react until the acid value became 1 or smaller. Thus, a component (b-1) solution having a solid content of 67.1% by weight and a double bond equivalent of 672 was obtained.

### Production Example 8 Preparation of component (b-2) solution

A flask of the same type as employed in Example 1 was charged with 90 parts of xylene, and was heated to 130°C and kept at this temperature. Thereafter, a mixed monomer solution containing 55 parts of n-butyl methacrylate, 20 parts of styrene, 25 parts of glycidyl methacrylate and 3 parts of Kayaester O was dropped over 3 hours, and then maturing was carried out for 0.5 hours. Further, a mixed solution containing 0.3 part of Kayaester O and 10 parts of xylene was dropped over 0.5 hour, and then maturing was carried out for 1.5 hours. Thereafter, 38 parts of solvent was evaporated under reduced pressure to give an acrylic resin solution. The resultant acrylic resin solution had a solid content of 62.4% by weight and number average molecular weight determined by GPC measurement was 8840.

Further, to 160 parts of the acrylic resin solution obtained, 12 parts of acrylic acid and 0.05 part of hydroquinone were added and heated to 120°C to react until the acid value became 1 or smaller, thereby a component (b-2) solution was obtained. The component (b-2) solution obtained had a solid content of 65.0% by weight and a double bond equivalent of 672.

### Production Example 9 Preparation of component (c-1) solution

A flask of the same type as employed in Example 1 was charged with 55 parts of n-butanol, and was heated to 118°C and kept at this temperature. Thereafter, a mixed solution containing a mixed monomer solution shown in Table 1 and 10 parts of n-butanol was dropped over 3 hours, and then maturing was carried out for 0.5 hours. Further, the mixture was heated to 120°C and then a mixed solution containing 0.8 part of Kayaester O and 10 parts of n-butanol was dropped over 0.5 hour, and then maturing was carried out for 1.5 hours. Thereafter, 23 parts of solvent was evaporated under reduced pressure to give a component (c-1) solution. The solid content, the number average molecular weight determined by GPC measurement, and the active hydrogen equivalent of the resultant component (c-1) solution are shown in Table 1.

### Production Example 10 Preparation of component (c-2) solution

A flask of the same type as employed in Example 1 was charged with 30 parts of n-butyl acetate, and was heated to 110°C and kept at this temperature. Thereafter, a mixed solution containing 18 parts of 2-acetoacetoxyethyl methacrylate, 25 parts of 2-ethylhexyl methacrylate, 7 parts of styrene and 3 parts of Kayaester O was dropped over 3 hours, and then maturing was carried out for 1 hour. Further, a mixed solution containing 0.3 part of Kayaester O and 3 parts of n-butyl acetate was dropped over 0.5 hour, and then maturing was carried out for 2 hours to give an acrylic resin solution. The acrylic resin obtained had a number average molecular weight determined by GPC measurement of 7300.

After 34 parts of n-butyl acetate was further added to this resin solution, a mixed monomer solution containing 5 parts of 2-(methacryloyloxy)ethyltrimethylammonium chloride, 25 parts of methyl methacrylate, 20 parts of 2-hydroxyethyl methacrylate and 0.8 part of Kayaester O was dropped over 3 hours, and then maturing was carried out for 1 hour. Further, after 0.08 part of Kayaester O was added, maturing was carried out for 1 hour to give an emulsion component (c-2) solution. The component (c-2) solution obtained had a solid content of 60.7% by weight and a viscosity at 20°C determined with a single cylinder type rotary viscometer (Model BM, manufactured by Tokyo Keiki, Co., Ltd.) of 3400 mPa·s.

### Production Example 11 Preparation of component (d-1) solution

A flask of the same type as employed in Example 1 was charged with 49.5 parts of Solvesso 100 and 5.5 parts of n-butanol, and was heated to 120°C and kept at this temperature. Thereafter, a mixed monomer solution shown in Table 1 was dropped over 3 hours, and then maturing was carried out for 0.5 hours. Further, a mixed solution containing 0.8 part of Kayaester O, 9 parts of Solvesso 100 and 1 part of n-butanol was dropped over 0.5 hour, and then maturing was carried out for 1.5 hours. Thereafter, 13 parts of solvent was evaporated under reduced pressure to give a component (d-1) solution. The solid content, the number average molecular weight determined by GPC measurement, and the active hydrogen equivalent of the resultant component (d-1) solution are shown in Table 1.

### Production Example 12 Preparation of component (d-2) solution

A flask of the same type as employed in Example 1 was charged with 47 parts of n-butyl acetate, and was heated to 110°C and kept at this temperature. Thereafter, a mixed solution containing 15 parts of 2-acetoacetoxyethyl methacrylate, 25 parts of 2-ethylhexyl methacrylate, 10 parts of styrene and 3 parts of Kayaester O was dropped over 3 hours, and then maturing was carried out for 1 hour. Further, a mixed solution containing 0.3 part of Kayaester O and 3 parts of n-butyl acetate was dropped over 0.5 hour, and then maturing was carried out for 2 hours to give an acrylic resin solution. The acrylic resin obtained had a number average molecular weight determined by GPC measurement of 6800.

After 20 parts of n-octane was further added to this resin solution, a mixed monomer solution containing 15 parts of glycidyl methacrylate, 20 parts of methyl methacrylate, 15 parts of 2-hydroxyethy methacrylate and 0.8 part of Kayaester O was dropped over 3 hours, and then maturing was carried out for 1 hour. Further, after 0.08 part of Kayaester O was added, maturing was carried out for 1 hour to give an emulsion component (d-2) solution. The component (d-2) solution obtained had a solid content of 60.6% by weight and a viscosity at 20°C determined with a single cylinder type rotary viscometer (Model BM, manufactured by Tokyo Keiki, Co., Ltd.) of 1740 mPa·s.

### Production Example 13 Preparation of component (d-3) solution

A component (d-3) solution was obtained in the same manner as Production Example 5 except using the monomers shown in Table 1. The solid content, the number average molecular weight determined by GPC measurement, and the active hydrogen equivalent of the resultant component (d-3) solution are shown in Table 1.

### Example 1

An additive solution was obtained by mixing 2 parts of Tinubin 384 (uv absorber, manufactured by Ciba-Geigy AG), 4 parts of Sanol LS-292 (light stabilizer, manufactured by Sankyo, Co., Ltd.) and 2 parts of acryl surface regulator manufactured by Nippon Paint Co., Ltd. (solid content: 50% by weight). A mixture containing 156 parts of the component (a-1) solution prepared in Production Example 1, 49 parts of pentaerythritol triacrylate, 35 parts of the component (c-1) solution prepared in Production Example 9, 24 parts of the component (d-1) solution prepared in Production Example 11 and 2 parts of Versatic 10 (versatic acid, manufactured by Shell Co., Ltd.) were stirred and mixed with disperser to be homogeneous. This mixture was added the additive solution obtained above and stirred to give a thermosetting coating composition. The resultant coating composition was diluted with n-butyl acetate so that the viscosity thereof at 20°C determined with a single cylinder type rotary viscometer (Model BM, manufactured by Tokyo Keiki, Co., Ltd.) would be 100 mPa·s. A sample (1.0 g) taken from the diluted coating composition was weighed and dried at 110°C for 1 hour, and the coating solid content thereof was measured to be 64% by weight.

Further, the viscosity of the coating composition after the dilution was measured using a Ford cup No.4

### (20°C) to be 30 seconds.

The diluted coating composition was air sprayed on a tinplate panel so that the dry film thickness would be 40 µm and then was heated at 140°C for 30 minutes to give a test panel.

### Examples 2-15 and Comparative Examples 1-5

Test panels were obtained in the same manner as Example 1 except that theremosetting coating compositions were obtained by mixing components according to Tables 3 and 4 followed by adding the addive solution prepared in Example 1. The coating solid contents measured of the coating compositions after dilution are shown in Tables 3 and 4.

On the other hand, a 0.8 mm-thick zinc phosphate-treated steel panel was electrodeposition coated with Power Top U-50 (a cationic electrodeposition coating manufactured by Nippon Paint, Co., Ltd.) so that the dry film thickness would be 25 µm, and then was heated and cured at 160°C for 30 minutes to give an electrodeposited coating film. This coating film was further air sprayed with Orga P-2 (a polyester solvent-borne intermediate coating manufactured by Nippon Paint Co., Ltd.) so that the dry film thickness would be 40 µm, and then was heated and cured at 140°C for 30 minutes to give an intermediate coating film. The resultant coating film was further air sprayed with Super Lacq M-260 (a water-borne base coating manufactured by Nippon Paint, Co., Ltd,.) so that the dry film thickness would be 16 µm and then heated at 80°C for 3 minutes. Thereafter, the above-mentioned coating composition after dilution was air sprayed so that the dry film thickness would be 40 µm, and then heated at 140°C for 30 minutes. The appearance of the resultant coating film was good without dispersion in gloss.

### Evaluation test

The resultant coating compositions after dilution and test panels were subjected to the evaluation tests described below. The evaluation results are shown in Tables 3 and 4.

### <Storage stability>

Each of coating compositions after dilution was stored at 40°C for 10 days and then the viscosity thereof was measured using a Ford cup No.4 (20°C). The storage stability was evaluated on the basis of the number of seconds increased. The evaluation criterion is as follows:
○ : The number of seconds increased was 30 seconds or less.
Δ : The number of seconds increased exceeded 30 seconds and was not more than 60 seconds.
× : The number of seconds increased exceeded 60 seconds.

### <Curability>

(1) Pencil hardness
   Pencil hardness was measured according to JIS K 5600-5-4. When the hardness is HB or more, the sample was regarded as pass mark.
(2) Solvent resistance
   The surface of a coating film on a test panel was rubbed back and forth 50 times with a pad of gauze immersed in xylene, and the change of the condition of the coating film was evaluated. The evaluation criterion is as follows:
○ : No change was observed.
Δ : There was no softening or blister, but gloss was deteriorated.
× : The change of the condition of the coating film such as softening, blister or the like occurred.

The results given in Tables 3 and 4 clearly show that the thermosetting coating composition of the present invention can retain both storage stability and curability even if the content of an organic solvent in a coating is reduced. Further, the content of an organic solvent present in a coating at the time of application can also be reduced.

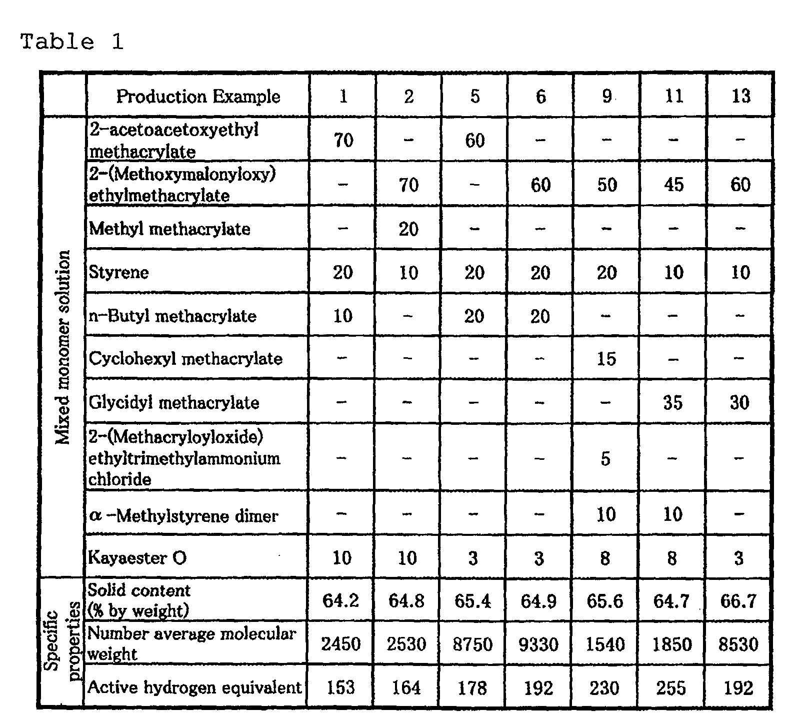

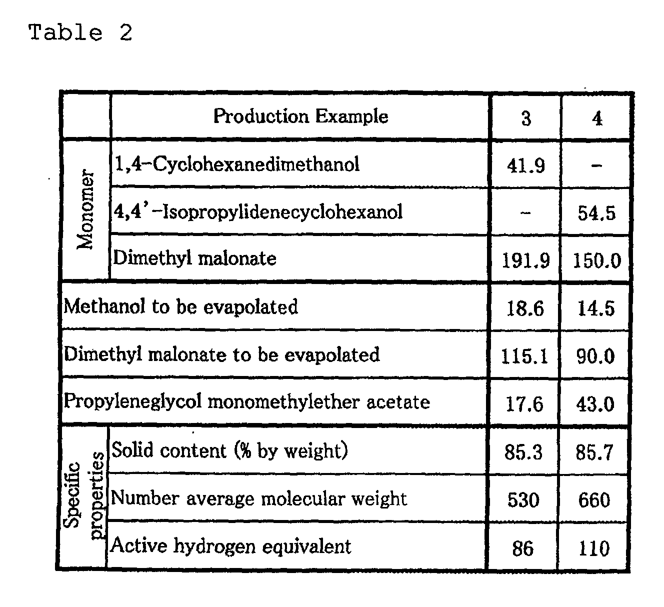

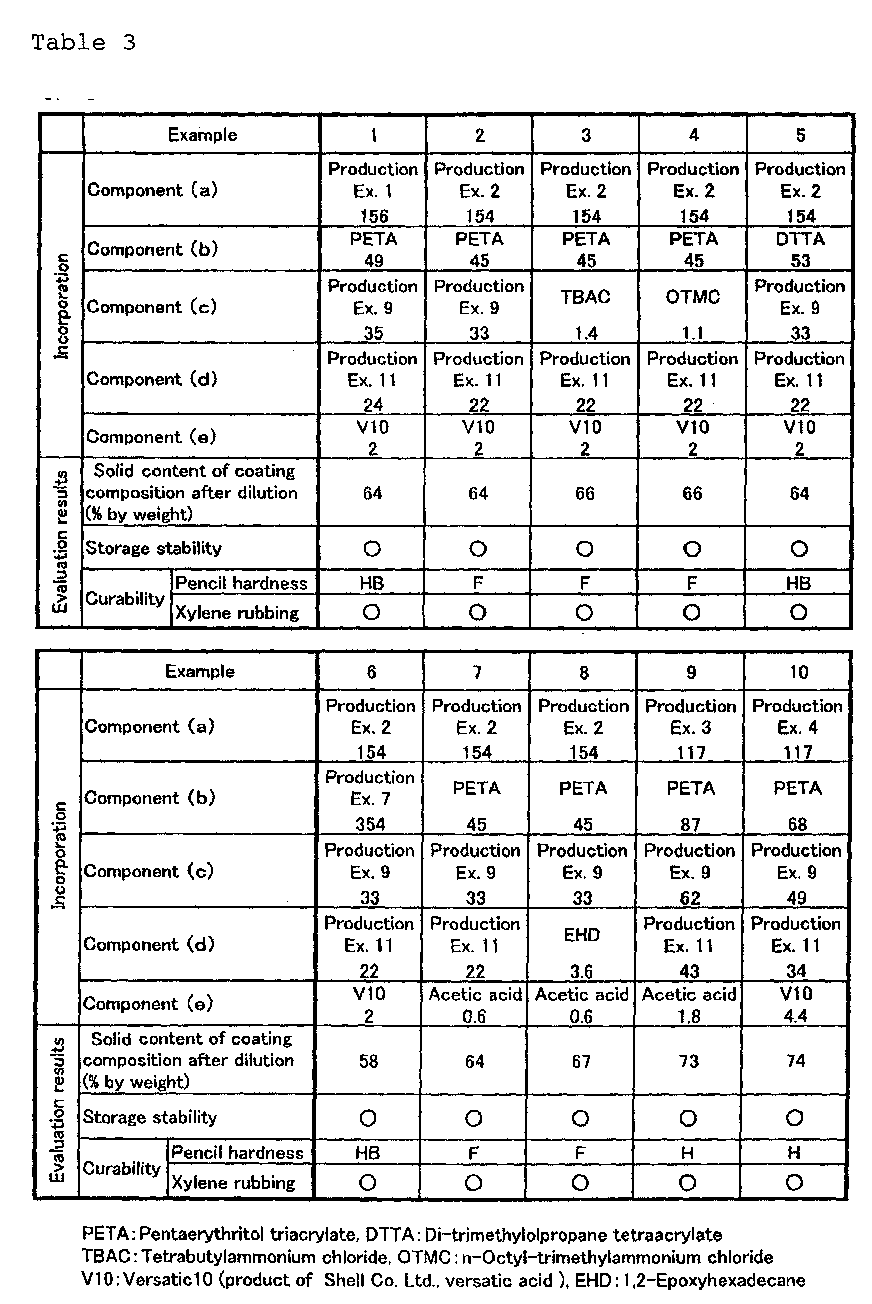

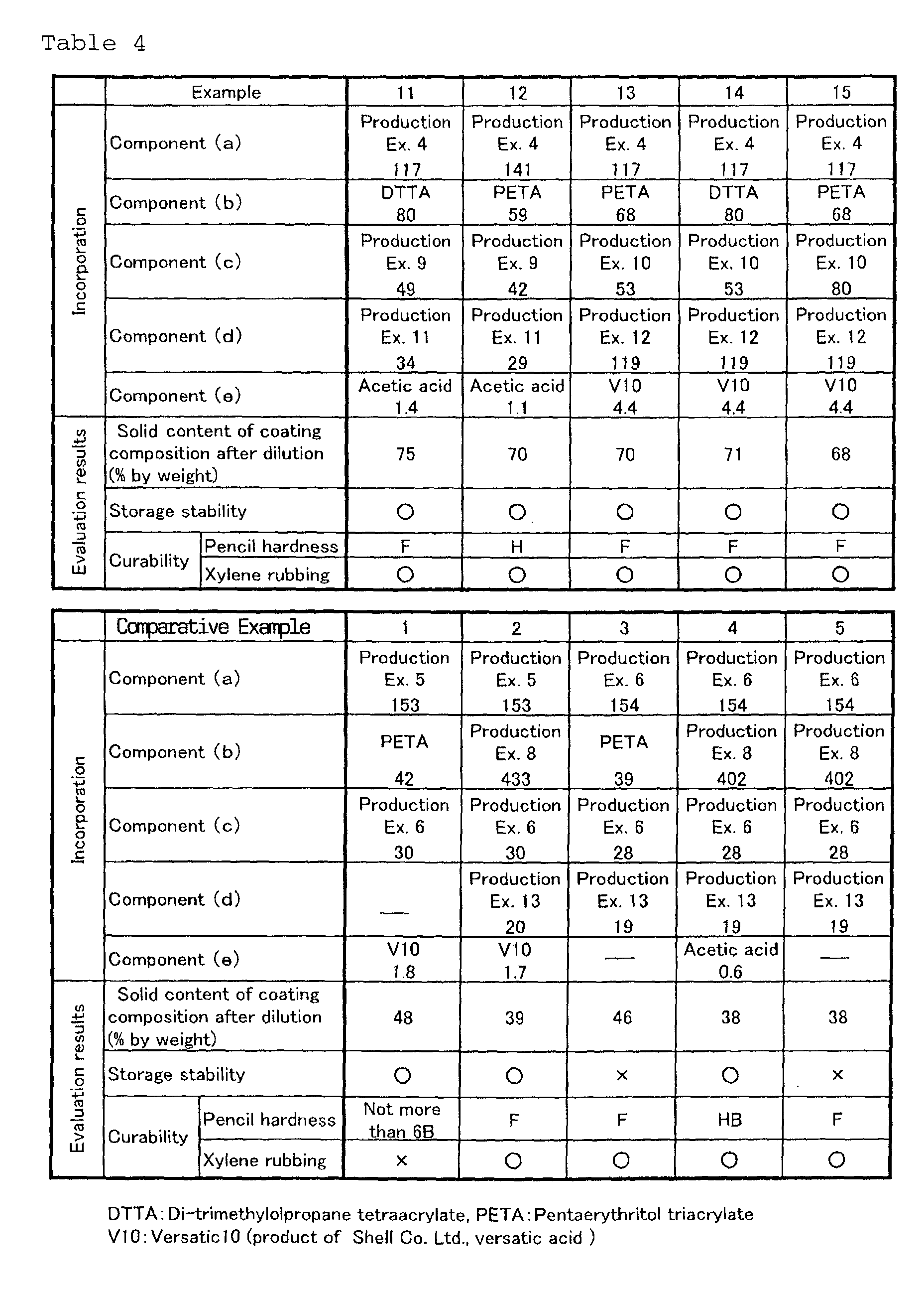

## Claims

1. A thermosetting coating composition comprising
a component (a) having a number average molecular weight of 300 to 3000 and two or more active methylene groups and/or active methine groups per molecule,
a component (b) having a number average molecular weight of 200 to 3000 and two or more α,β-unsaturated carboxylic ester groups per molecule,
a component (c) having an onium salt,
a component (d) having an epoxy group and/or 5-membered ring carbonate group and
a component (e) being an organic acid, a phenol or a Lewis acid,
wherein a solid content of said coating composition at a viscosity of 100 mPa·s is 50% by weight or more at 20°C.

2. The thermosetting coating composition according to Claim 1,
wherein said component (a) is at least one member selected from the group consisting of reaction products of a polyol with a carboxylic acid compound having an active methylene group and/or an active methine group, and/or a carboxylic acid ester having an active methylene group and/or an active methine group, reaction products of a polyamine compound with a diketene, acrylic resin having an active methylene group and/or an active methine group, and reaction products of an isocyanate compound with a carboxylic acid compound having an active methylene group and/or a carboxylic acid ester having an active methylene group.

3. The thermosetting coating composition according to Claim 1 or 2,
wherein said component (b) is at least one member selected from the group consisting of (meth)acrylate esters of a polyol, unsaturated polyester resins, epoxy(meth)acrylate resins, urethan(meth)acrylate resins, acrylic resins containing an α,β-unsaturated carbonyl group, polyether (meth)acrylate resins, and silicone oligomers having a (meth)acryloyl group.

4. The thermosetting coating composition according to any of Claims 1 to 3,
wherein a cation of the onium salt in said component (c) is at least one cation selected from the group consisting of a quaternary ammonium cation, a quaternary phosphonium cation and a tertiary sulfonium cation.

5. The thermosetting coating composition according to any of Claims 1 to 4,
wherein an anion of the onium salt in said component (c) is preferably at least one anion selected from the group consisting of halide anions except fluoride, a carboxylate anion, a sulfonate anion, a sulfate anion, a nitrate anion and a phosphate anion.

6. The thermosetting coating composition according to any of Claims 1 to 5,
wherein said component (c) is a resin resulting from copolymerization of monomer components comprising at least one monomer selected from the group consisting of quaternized aminoalkyl (meth)acrylates, quaternized aminoalkyl (meth)acrylamides, quaternary ammonium (meth)acrylates, quaternary phosphinoalkyl (meth)acrylates and quaternary phosphonium (meth)acrylates.

7. The thermosetting coating composition according to any of Claims 1 to 6,
wherein said component (d) is a glycidyl compound, an alicyclic epoxy compound or an α-olefin epoxide.

8. The thermosetting coating composition according to any of Claims 1 to 7,
wherein said component (d) is a resin resulting from copolymerization of monomer components comprising at least one monomer selected from the group consisting of glycidyl (meth)acrylates, β-methylglycidyl (meth)acrylates, glycidyl ethers of 4-hydroxybutyl (meth)acrylate and (meth)acrylates of 3,4-epoxycyclohexanemethanol.

9. The thermosetting coating composition according to any of Claims 1 to 8,
wherein a content of said component (e) is preferably 1 to 20 times, in molar number, relative to the onium salt of said component (c).

10. The thermosetting coating composition according to any of Claims 1 to 9 comprising
at least one color component selected from the group consisting of inorganic pigments, organic pigments, dyes and luster-color pigments.

11. A method of forming a coating film comprising
applying the thermosetting coating composition according to any of Claims 1 to 10 to an article to be coated,
wherein a coating solid content of said thermosetting coating composition at the time of application is 50% by weight or more.
